(19) Europäisches Patentamt
European Patent Office
Office européen des brevets

(11) **EP 2 626 767 A2**

## (12) EUROPEAN PATENT APPLICATION

(43) Date of publication:
**14.08.2013 Bulletin 2013/33**

(51) Int Cl.:
**G06F 1/16** $^{(2006.01)}$

(21) Application number: **12198756.4**

(22) Date of filing: **20.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.02.2012 KR 20120012529**

(71) Applicant: **Samsung Electronics Co., Ltd Gyeonggi-do 443-742 (KR)**

(72) Inventor: **Jung, Ho-seop Gyeonggi-do (KR)**

(74) Representative: **Hewett, Jonathan Michael Richard et al Venner Shipley LLP 200 Aldersgate London EC1A 4HD (GB)**

(54) **Folding type apparatus and method of controlling the same**

(57) A folding type apparatus including a display unit and a body unit, the folding type apparatus includes a first sensor disposed in the display unit to measure a first angular velocity at which the display unit is rotated with respect to a hinge connecting the display unit and the body unit by sensing movement of the display unit, a second sensor disposed in the body unit to measure a second angular velocity at which the body unit is rotated with respect to the hinge by sensing movement of the body unit, and a controller to control the folding type apparatus according to an angle between the display unit and the body unit with respect to the hinge by receiving the first and second angular velocities.

FIG. 8

EP 2 626 767 A2

**EP 2 626 767 A2**

**Description**

The present invention relates to a folding type apparatus and a method of controlling the same.

Recently, various apparatuses have been developed and used. Among these apparatuses, a folding type apparatus includes a display unit and a body that are disposed by interposing a hinge, and the display unit and the body are folded. In the folding type apparatus, if the display unit and the body are folded, a user cannot see the display unit, and thus the folding type apparatus is controlled to stop operating.

In order to determine folding/unfolding of a folding type apparatus, a method of using a switch or a magnet may be used. According to the method of using the switch, a display unit includes a protruding unit, and a body includes the switch that may be pressed by the protruding unit. In the method of using the switch, if the apparatus is folded, the protruding unit of the display unit presses the switch of the body, and then folding/unfolding of the apparatus is determined by determining whether the switch is pressed by the protruding unit.

According to the method of using a magnet, a display unit includes a magnet, and a body includes a Hall effect integrated chip (IC). In the method of using the magnet, when a folding type apparatus is folded, the Hall effect IC included in the body recognizes magnetism generated by the magnet included in the display unit and determines folding/ unfolding of the folding type apparatus accordingly.

The present invention provides an apparatus and method of controlling a folding type apparatus by determining folding/unfolding of the folding type apparatus.

The present invention also provides a computer readable recording medium having embodied thereon a computer program to execute the method.

Additional features and utilities of the present invention will be set forth in part in the description which follows and, in part, will be obvious from the description, or may be learned by practice of the invention.

Embodiments of the present invention may be achieved by providing a folding type apparatus including a display unit and a body unit, the folding type apparatus including a first sensor disposed in the display unit to measure a first angular velocity at which the display unit is rotated with respect to a hinge connecting the display unit and the body unit by sensing movement of the display unit, a second sensor disposed in the body unit to measure a second angular velocity at which the body unit is rotated with respect to the hinge by sensing movement of the body unit, and a controller to control the folding type apparatus according to an angle between the display unit and the body unit with respect to the hinge by receiving the first and second angular velocities.

The controller may calculate the angle, compares the angle with a predetermined threshold value and control the folding type apparatus based on a result of the comparison.

The controller may obtain a first angle at which the display unit is rotated with respect to the hinge by integrating the first angular velocity according to time and obtains a second angle at which the body unit is rotated with respect to the hinge by integrating the second velocity according to time and calculate the angle between the display unit and the body unit by using a sum of the first angle and the second angle.

If the calculated angle is less than the predetermined threshold value, the controller may control the folding type apparatus to enter a standby mode.

If the calculated angle is less than the predetermined threshold value, the controller may block supply of power to the display unit.

If the calculated angle is less than the predetermined threshold value, the controller may turn off a power source of the folding type apparatus.

If the calculated angle is greater than the predetermined threshold value, the controller may supply power to the display unit.

The first and second sensors may be gyro sensors.

The folding type apparatus may include an initial angle before the display unit and body unit are rotated, and the angle may be added to the initial angle to determine a final position angle of the folding type apparatus.

The controller may determine an absolute value of the angle to compare the angle with a predetermined threshold value and control the folding type apparatus based on a result of the comparison.

Embodiments of the present invention may also be achieved by providing a method of controlling a folding type apparatus including a display unit and a body unit, the method including measuring a first angular velocity at which the display unit is rotated with respect to a hinge connecting the display unit and the body unit by sensing movement of the display unit, measuring a second angular velocity at which the body unit is rotated with respect to the hinge by sensing movement of the body unit, and controlling the folding type apparatus according to an angle between the display unit and the body unit by receiving the first and second angular velocities. The controlling of the folding type apparatus may include controlling the folding type apparatus by calculating the angle between the display unit and the body unit and comparing the angle with a predetermined threshold value.

The controlling of the folding type apparatus may include calculating the angle between the display unit and the body unit by using a sum of a first angle and a second angle, wherein the first angle at which the display unit is rotated with respect to the hinge is obtained by integrating the first angular velocity according to time, and the second angle at which the body unit is rotated with respect to the hinge is obtained by integrating second velocity according to time.

The controlling of the folding type apparatus may include, if the calculated angle is less than the predetermined threshold value, controlling the folding type apparatus to enter a standby mode.

The controlling of the folding type apparatus may include, if the calculated angle is less than the predetermined threshold value, controlling the supply of power to the display unit to be blocked.

The controlling of the folding type apparatus may include, if the calculated angle is less than the predetermined threshold value, turning off a power source of the folding type apparatus.

The controlling of the folding type apparatus may include, if the calculated angle is greater than the predetermined threshold value, supplying power to the display unit.

The first and second angular velocities may be measured by using gyro sensors.

Embodiments of the present invention may also be achieved by providing a method of controlling a folding type apparatus including a display unit and a body unit, the method including receiving a first angular velocity at which the display unit is rotated with respect to a hinge connecting the display unit and the body unit, receiving a second angular velocity at which the body unit is rotated with respect to the hinge, and calculating an angle between the display unit and the body unit with respect to the hinge by using the first and second angular velocities and controlling the folding type apparatus according to the calculated angle.

According to another aspect of the present invention, there is provided a computer readable recording medium having embodied thereon a computer program to execute the method.

These and/or other features and utilities of the present invention will become apparent and more readily appreciated from the following description of the exemplary embodiments, taken in conjunction with the accompanying drawings of which:

FIG. 1 is a view illustrating a folding type apparatus according to an embodiment of the present invention;
FIG. 2 is a view illustrating a display unit of the folding type apparatus of FIG. 1;
FIG. 3 is a view illustrating a body unit of the folding type apparatus of FIG. 1;
FIG. 4 is a block diagram illustrating the folding type apparatus of FIG. 1;
FIG. 5 is a view illustrating an operation of the folding type apparatus of FIG. 1;
FIG. 6 is a view illustrating an operation of a folding type apparatus according to another embodiment of the present invention;
FIG. 7 is a view illustrating an operation of a folding type apparatus according to another embodiment of the present invention;
FIG. 8 is a view illustrating an operation of a folding type apparatus according to another embodiment of the present invention;
FIG. 9 is a flowchart illustrating a method of controlling the folding type apparatus of FIG. 1; and
FIG. 10 is a block diagram illustrating a folding type apparatus according to another embodiment of the present invention.

Reference will now be made in detail to the embodiments of the present invention, examples of which are illustrated in the accompanying drawings, wherein like reference numerals refer to the like elements throughout. The embodiments are described below in order to explain the present invention while referring to the figures.

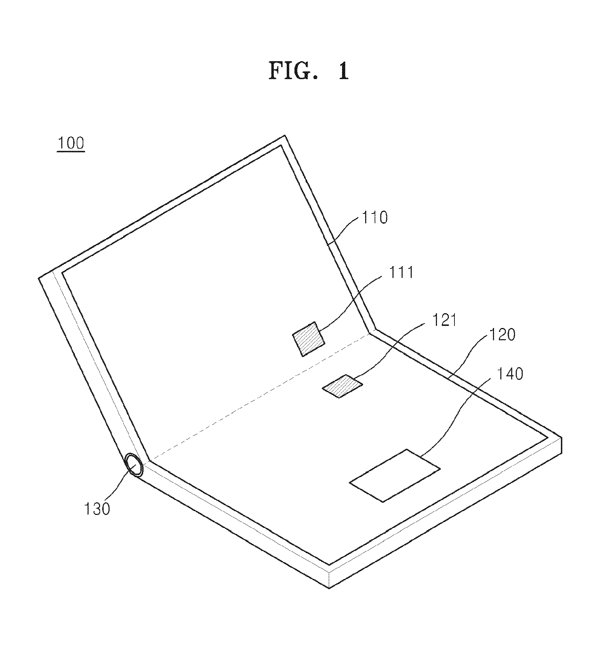

FIG. 1 is a view illustrating a folding type apparatus 100 according to an embodiment of the present invention. Referring to FIG. 1, the folding type apparatus 100 includes a display unit 110, a body unit 120, a hinge 130, a first sensor 111, a second sensor 121, and a controller 140.

The folding type apparatus 100 is an electronic device that displays an image and executes a program. For example, the folding type apparatus 100 may be a notebook computer, a folding type mobile phone, or the like. In the folding type apparatus 100, the display unit 110 and the body unit 120 may be rotated with respect to the hinge 130. The display unit 110 and the body unit 120 of the folding type apparatus 100 may be connected to each other by using the hinge 130. The hinge 130 serves as a rotation axis when the display unit 110 and the body unit 120 are rotated. Accordingly, the hinge 130 is used to fold and unfold the folding type apparatus 100.

If the display unit 110 and the body unit 120 are rotated, a predetermined angle is formed between the display unit 110 and the body unit 120. The predetermined angle is an angle formed between a plane of the display unit 110 and a plane of the body unit 120 when the hinge 130 is a vertex. Operations of the folding type apparatus 100 are controlled according to the angle.

The display unit 110 displays an image. For example, the display unit 110 may be a liquid crystal display (LCD) monitor, or the like. The display unit 110 displays an image so that a user may see processing results of the controller 140 of the body unit 120. The display unit 110 may also include one or more input units, such as a touch-screen display in which to input data and control operations of the folding type apparatus 100.

The display unit 110 includes a first sensor 111. If the display unit 110 is moved, the first sensor 111 is moved accordingly.

The body unit 120 processes and executes a program. The body unit 120 may include a central processing unit (CPU), a memory, a power source, and the like. The body unit 120 controls the folding type apparatus 100. The body unit may also include one or more inputs unit such as a keyboard, a mouse or mousepad unit, roller ball, function keys, etc. to input data and control operations of the folding type apparatus 100.

The body unit 120 includes a second sensor 121. If the body unit 120 is moved, the second sensor 121 is moved accordingly.

In FIG. 1, the folding type apparatus 100 is illustrated to include only elements that are related to the current embodiment. Accordingly, one of ordinary skill in the art would understand that other general-use elements may further be included in addition to the elements illustrated in FIG. 1.

As illustrated in FIG. 1, the positions of sensor 111 and sensor 121 are in similar places in the respective display unit 110 and body unit 120. As illustrated, when folded, the the first sensor 111 and second sensor 121 would thus overlap with each other, appearing face to face. However, the present invention is not limited thereto. The sensor 111 disposed in the display unit 110 may be positioned in any area within the display unit 110. Simillary, the sensor 121 may be positioned at any region within the body unit 120.

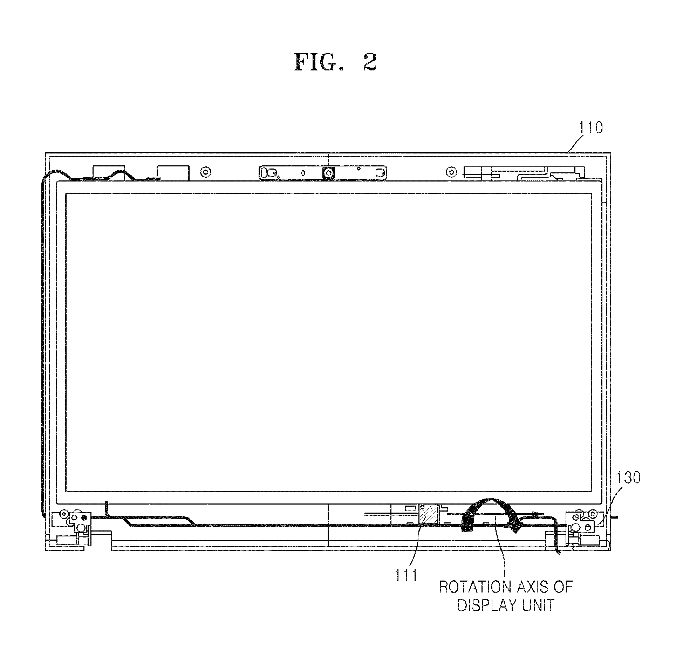

FIG. 2 is a view illustrating the display unit 110 of the folding type apparatus 100 of FIG. 1. The display unit 110 includes the first sensor 111. The first sensor 111 senses movement of the display unit 110 and measures a first angular velocity at which the display unit 110 is rotated with respect to the hinge 130 connecting the display unit 110 and the body unit 120. The first sensor 111 is a sensor capable of sensing a rotational motion of the display unit 110.

The first sensor 111 may be, for example, a gyro sensor. The gyro sensor detects an angular velocity. In other words, the gyro sensor measures an angular rotation per unit time. The gyro sensor is attached to the display unit 110. If the display unit 110 is rotated, a force is applied in a direction perpendicular to a movement direction of the display unit 110, and the gyro sensor detects an angular velocity of the display unit 110 by using the force.

The first sensor 111 is disposed in the display unit 110. Accordingly, the first sensor 111 is rotated in association with the rotation of the display unit 110 and may detect an angular velocity of the display unit 110

The first sensor 111 outputs the measured first angular velocity to the controller 140. The first sensor 111 measures an angular velocity of the display unit 110 when the display unit 110 is rotated and outputs the measured angular velocity to the controller 140.

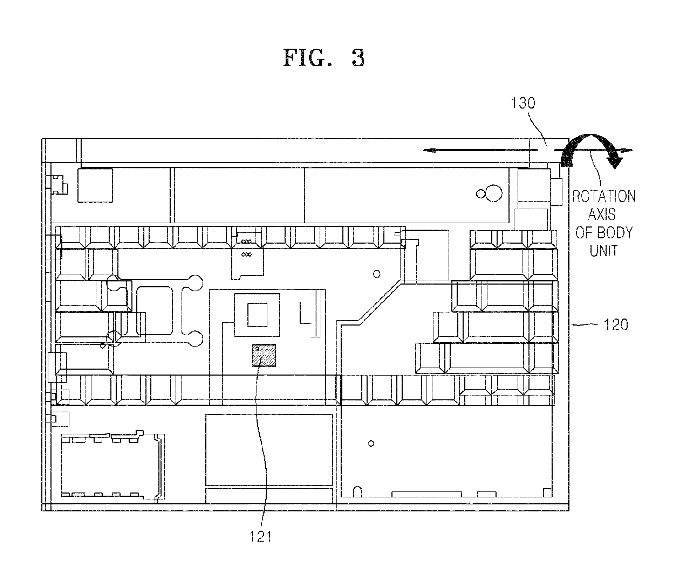

FIG. 3 is a view illustrating the body unit 120 of the folding type apparatus of FIG. 1. The body unit 120 includes the second sensor 121. The second sensor 121 senses movement of the body unit 120 and measures a second angular velocity at which the body unit 120 is rotated with respect to the hinge 130. The second sensor 121 may sense a rotation motion of the body unit 120.

The second sensor 121 may be, for example, a gyro sensor. The gyro sensor detects an angular velocity. In other words, the gyro sensor measures an extent to which an angle is moved per unit time. If the gyro sensor is attached to the body unit 120 and the body unit 120 is rotated, force is applied in a direction perpendicular to a movement direction of the body unit 120, and the gyro sensor detects an angular velocity of the body unit 120 by using the force.

The second sensor 121 is disposed in the body unit 120. Accordingly, the second sensor 121 is rotated in association with the rotation of the body unit 120 and may detect an angular velocity of the body unit 120.

The second sensor 121 outputs the measured second angular velocity to the controller 140. The second sensor 121 measures an angular velocity of the body unit 120 when it rotates and outputs the measured angular velocity to the controller 140.

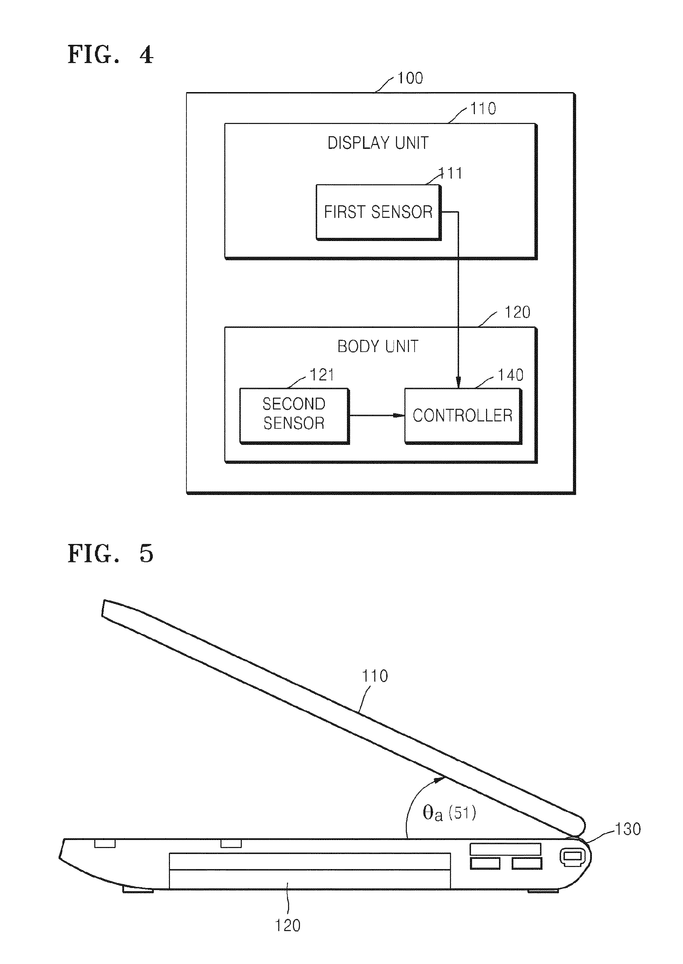

FIG. 4 is a block diagram illustrating the folding type apparatus 100 of FIG. 1. The folding type apparatus 100 includes the first sensor 111, the second sensor 121, and the controller 140. The controller 140 receives angular velocities of the display unit 110 and the body unit 120 from the first sensor 111 and the second sensor 121, respectively, and may determine a folding extent of the folding type apparatus 100 by using the received angular velocities. The controller 140 may control operations of the display unit 110 and the body unit 120 according to the folding extent of the folding type apparatus 100. The folding extent of the folding type apparatus 100 is an angle between the display unit 110 and the body unit 120. For example, if the angle between the display unit 110 and the body unit 120 is 0 degrees, the folding type apparatus 100 is in a completely folded state. Also, if the angle between the display unit 110 and the body unit 120 is equal to or less than a first degree, for example, the folding type apparatus 100 may be regarded as being partially folded. If the angle between the display unit 110 and the body unit 120 is equal to or greater than the first degree, for example, the folding type apparatus 100 may be regarded as being unfolded. The first degree may be pre-set by the manufacturer or programmed by the user to be 20 degrees, 30 degrees, 40 degrees, or any desired angle. The controller 140 controls the display unit 110 and the body unit 120 according to the folded or unfolded state of the folding type apparatus 100.

In an exemplary embodiment of the present invention, it is possible that the body unit may remain stationary, and the sensor 111 of the display unit 110 may sense an angular velocity only of the display unit 110, and the sensor 121 does not sense an angular velocity of the body unit 120. A similar scenario can exist when the display unit 110 remains stationary, and the body unit 120 rotates. The sensor 121 will sense an angular velocity of the body unit 120, but the sensor 111 will not sense an angular velocity of the display unit 110.

Both sensors 111 and 121 may sense folding of the display unit 110 and body unit 120 simultaneously. A dual sensing may occur when the folding type apparatus 100 is held in a user's hands and the user closes or opens the folding type apparatus 100 from both directions at the same time. In some instances, the display unit 110 and body unit 120 may open or close about the hinge at the same angular velocities, or the display unit 110 and body unit 120 may open or close at different angular velocities relative to each other. In either case, the controller 140, upon receiving angular measurements from the sensors 110 and 120, determines the folding extent of the folding type apparatus 100 as described herein.

The controller 140 controls the display unit 110 and the body unit 120 according to a result of movements of the display unit 110 and the body unit 120 that are respectively sensed by the first sensor 111 and the second sensor 121. In other words, a dynamic state of the folding type apparatus 100 instead of a stationary state of the folding type apparatus 100 is sensed.

The folding type apparatus 100 calculates an angle between the display unit 110 and the body unit 120 by using a sum of a first angle and a second angle, wherein the first angle at which the display unit 110 is rotated with respect to the hinge 130 is obtained by integrating the first angular velocity according to time and the second angle at which the body unit 120 is rotated with respect to the hinge 130 is obtained by integrating the second angular velocity according to time. In other words, the controller 140 obtains the first angle by integrating the first angular velocity received from the display unit 110 during a time when the display unit 110 is moved. The controller 140 obtains the second angle by integrating the second angular velocity received from the body unit 120 during a time when the body unit 120 is moved.

The first angular velocity refers to an angular velocity at which the display unit 110 is rotated, and the second angular velocity refers to an angular velocity at which the body unit 120 is rotated. The first and second angular velocities are angles at which the display unit 110 and the body unit 120 are rotated per unit time, respectively, and thus the controller 140 may obtain the first and second angles by integrating the first and second angular velocities according to time. The controller 140 calculates a sum of the obtained first and second angles. The controller 140 may obtain the sum by using Equation 1 below.

$$\int_0^t a \cdot dt - \int_0^t b \cdot dt = \theta_1 - \theta_2 \qquad (1)$$

wherein, a denotes the first angular velocity, b denotes the second angular velocity, $\theta_1$ denotes the first angle, and $\theta_2$ denotes the second angle.

The controller 140 may obtain in real time an angle between the display unit 110 and the body unit 120 by summing an initial value of the angle between the display unit 110 and the body unit 120 and the obtained sum of the first and second angles. When the display unit 110 and the body unit 120 are completely folded, the initial value of the angle between the display unit 110 and the body unit 120 is 0 degrees. The controller 140 may obtain the angle between the display unit 110 and the body unit 120 by adding the sum of the first and second angles to 0 degrees, which is the initial value of the angle between the display unit 110 and the body unit 120.

For example, the first angular velocity measured when the display unit 110 is moved in a direction opposite to the body unit 120 may be a positive value, and the second angular velocity measured when the body unit 120 is moved in a direction opposite to the display unit 110 may be a positive value. In this case, if the sum of the first and second angles is a positive value, it means the folding type apparatus 100 is being unfolded

As another example, the first angular velocity measured when the display unit 110 is moved in a direction towards the body unit 120 may be a negative value, and the second angular velocity measured when the body unit 120 is moved in a direction towards the display unit 110 may be a negative value. In this case, if the sum of the first and second angles is a negative value, it means the folding type apparatus 100 is being folded. In other words, if the sum of the first and second angles is a positive value, the controller 140 adds a positive value to the initial angle between the display unit 110 and the body unit 120, and thus the angle between the display unit 110 and the body unit 120 is increased, meaning the folding type apparatus 100 is being unfolded. If the sum of the first and second angles is a negative value, the controller 140 adds a negative value to the initial angle between the display unit 110 and the body unit 120, and thus the angle between the display unit 110 and the body unit 120 is decreased, meaning the folding type apparatus 100 is being folded.

Alternatively, depending on a user action, situations may arise where one of the display unit 110 or body unit 120 are moved away from the respective opposite body unit 120 or display unit 110, and the other of the body unit 120 or display unit 110 is moved towards the opposing unit. In this case, as above, a positive angle may be added to a negative angle. If the result is positive, the space between the display unit 110 and body unit 120 has become larger. If the result is negative, the space between the display unit 110 and body unit 120 has become smaller. In both cases, the positive angle is added to the negative angle, which are both added to the initial angle to determine a resultant angle of the folding type apparatus 100.

The controller 140 controls operations of the folding type apparatus 100 by using the obtained angle. The controller 140 may control operations of the folding type apparatus 100 by comparing the obtained angle with a predetermined threshold value. In this case, the predetermined threshold value may be a predetermined angle or a plurality of values. Also, the predetermined threshold value may be input by a user. If, as noted above, the sum of the detected angles is a negative number, the controller 140 determines the absolute value of the negative angle to obtain a positive value for comparison purposes with the various threshold values disclosed herein.

For example, if the angle between the display unit 110 and the body unit 120 is equal to or less than the predetermined threshold value, the controller 140 may not supply power to the display unit 110. In other words, in order to reduce power to be consumed in the display unit 110, the controller 140 may control the folding type apparatus 100 so that the display unit no does not output anything to be displayed on a screen, by blocking power supplied to the display unit 110.

Also, the controller 140 may control the folding type apparatus 100 to enter a standby mode. The standby mode is a state where only a minimum amount of power to operate the folding type apparatus 100 is supplied. For example, the standby mode may be a state where power to operate just the CPU is supplied.

Alternatively, if the angle between the display unit 110 and the body unit 120 is equal to or greater than the predetermined threshold value, the controller 140 may supply power to the display unit 110. In this case, when a user sets an angle at which the user may watch the display unit 110 to be a predetermined threshold value and when the angle between the display unit 110 and the body unit 120 is greater than the predetermined threshold value, the controller 140 may supply power to the display unit 110.

Alternatively, the controller 140 may control the folding type apparatus 100 based on a result obtained by comparing the angle between the display unit 110 and the body unit 120 with a plurality of threshold values. For example, when the angle between the display unit 110 and the body unit 120 is less than a first threshold value, the controller 140 may control the folding type apparatus 100 to enter a standby mode. When the angle between the display unit 110 and the body unit 120 is greater than the first threshold value and less than a second threshold value, the controller 140 may control the folding type apparatus 100 to be normally operated.

Alternatively, according to a result obtained by comparing the angle between the display unit 110 and the body unit 120 with a plurality of threshold values, the controller 140 may adjust brightness of the display unit 110. In other words, whenever the angle between the display unit 110 and the body unit 120 is gradually increased, the controller 140 may gradually increase the brightness of the display unit 110.

Also, the controller 140 illustrated in FIG. 4 may correspond to one or more processors. The processor may be configured as an array including a plurality of logic gates, or a combination of a general-use micro processor and a memory storing a program that may be executed in the micro processor. Also, the processor may be configured as a different type of hardware.

The first sensor 111 and the second sensor 121 measure an angular velocity of the display unit 110 and an angular velocity of the body unit 120, respectively, and output the measured angular velocities to the controller 140. The first sensor 111 senses movement of the display unit 110, measures the first angular velocity at which the display unit 110 is rotated with respect to the hinge 130 connecting the display unit 110 and the body unit 120, and outputs the measured first angular velocity to the controller 140. The second sensor 121 senses movement of the body unit 120, measures the angular velocity at which the body unit 120 is rotated with respect to the hinge 130 connecting the display unit 110 and the body unit 120, and outputs the measured second angular velocity to the controller 140.

FIG. 5 is a view illustrating an operation of the folding type apparatus 100 of FIG. 1. Referring to FIG. 5, from among the display unit 110 and the body unit 120, only the display unit 110 is rotated. In this case, the controller 140 controls operations of the folding type apparatus 100 by using the first angle received from the first sensor 111 disposed in the display unit 110.

In FIG. 5, when the folding type apparatus 100 is in a folded state, the display unit 110 is rotated by $\theta_a$. 51, a positive angle since the display unit 110 is rotated away from the body unit 120. Since only the display unit 110 is rotated, the controller 140 may determine $\theta_a$ 51 to be the angle between the display unit 110 and the body unit 120. Accordingly, the controller 140 may compare the determined angle with a threshold value and may control operations of the folding type apparatus 100 when the angle is greater than the threshold value and when the angle is less than the threshold value.

If there is an initial value of the angle between the display unit 110 and the body unit 120, the controller 140 may add the angle at which the display unit 110 is rotated to the initial value according to a direction in which the display unit 110 is rotated to determine a resultant angle of the folding type apparatus 100.

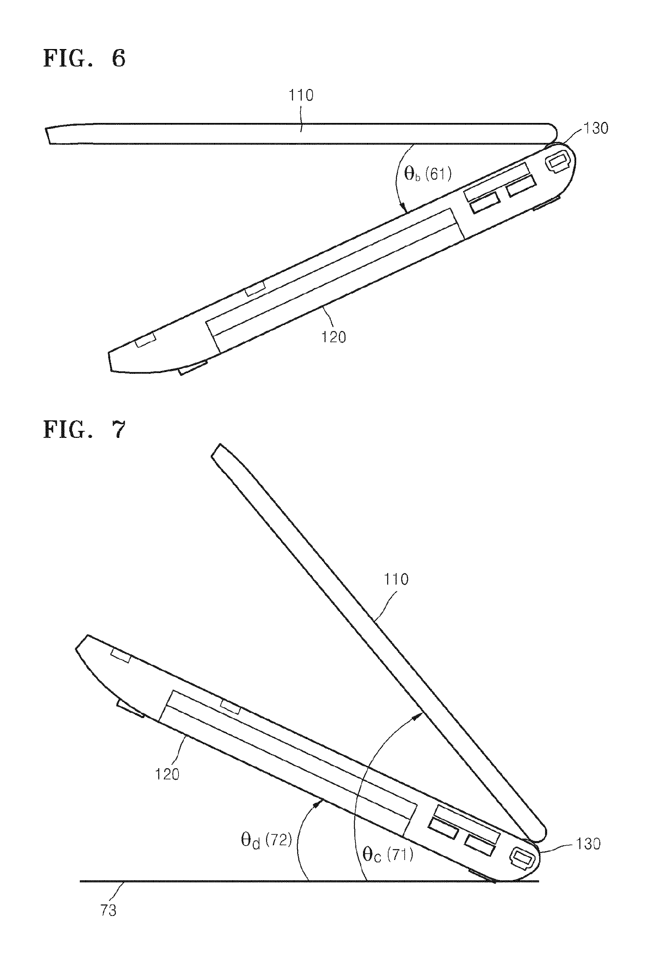

FIG. 6 is a view illustrating an operation of the folding type apparatus 100 according to another embodiment of the present invention. Referring to FIG. 6, from among the display unit 110 and the body unit 120, only the body unit 120 is rotated. In this case, the controller 140 controls the operation of the folding type apparatus 100 by using the second angle received from the second sensor 121 disposed in the body unit 120.

In FIG. 6, in a state where the folding type apparatus 100 is in a folded state, the body unit 120 is rotated by $\theta_b$ 61, a positive angle since the body unit is rotated away from the display unit 110. Since only the body unit 120 is rotated, the controller 140 may determine $\theta_b$ 61 to be the angle between the display unit 110 and the body unit 120. Accordingly, the controller 140 may compare the determined angle with a threshold value and may control the operation of the folding type apparatus 100 when the angle is greater than the threshold value and when the angle is less than the threshold value.

If there is an initial value of the angle between the display unit 110 and the body unit 120, the controller 140 may add the angle at which the body unit 120 is rotated to the initial value according to a direction in which the body unit 120 is rotated to determine a resultant angle of the folding type apparatus 100.

FIG. 7 is a view illustrating an operation of the folding type apparatus 100 according to another embodiment of the present invention. Referring to FIG. 7, both the display unit 110 and the body unit 120 are rotated in the same direction. In this case, the controller 140 controls the operation of the folding type apparatus 100 by using the first angle received from the first sensor 111 disposed in the display unit 110 and the second angle received from the second sensor 121 disposed in the body unit 120.

The first angle at which the display unit 110 is rotated is $\theta_c$, 71, and the angle at which the body unit 120 is rotated is $\theta_d$ 72. The measured $\theta_c$, 71 and $\theta_d$ 72 are angles at which the display unit 110 and the body unit 120 are rotated from a reference surface 73, respectively.

In FIG. 7, when the folding type apparatus 100 is in a folded state, the display unit 110 is rotated by $\theta_c$, 71, which is a positive angle since the display unit is being rotated away from the body unit 120, and the body unit 120 is rotated by $\theta_d$ 72, which is a negative angle since the body unit 120 is being rotated towards the display unit 110. Since both the display unit 110 and the body unit 120 are rotated, the controller 140 may calculate $\theta_c$ 71 and $\theta_d$ 72 and determine the calculated $\theta_c$ 71 and $\theta_d$ 72 to be angles between the display unit 110 and the body unit 120. In this case, the controller 140 calculates the angles $\theta_c$, 71 and the $\theta_d$ 72 and determines the angle between the display unit 110 and the body unit 120 by using a value obtained by adding $\theta_d$ 72 and $\theta_c$ 71. Accordingly, the controller 140 may compare the determined angle with a threshold value and may control the operation of the folding type apparatus 100 when the angle is greater than the threshold value and when the angle is less than the threshold value.

If there is an initial value of the angle between the display unit 110 and the body unit 120, the controller 140 may add the determined angle to the initial value to determine a resultant angle between the display unit 110 and the body unit 120.

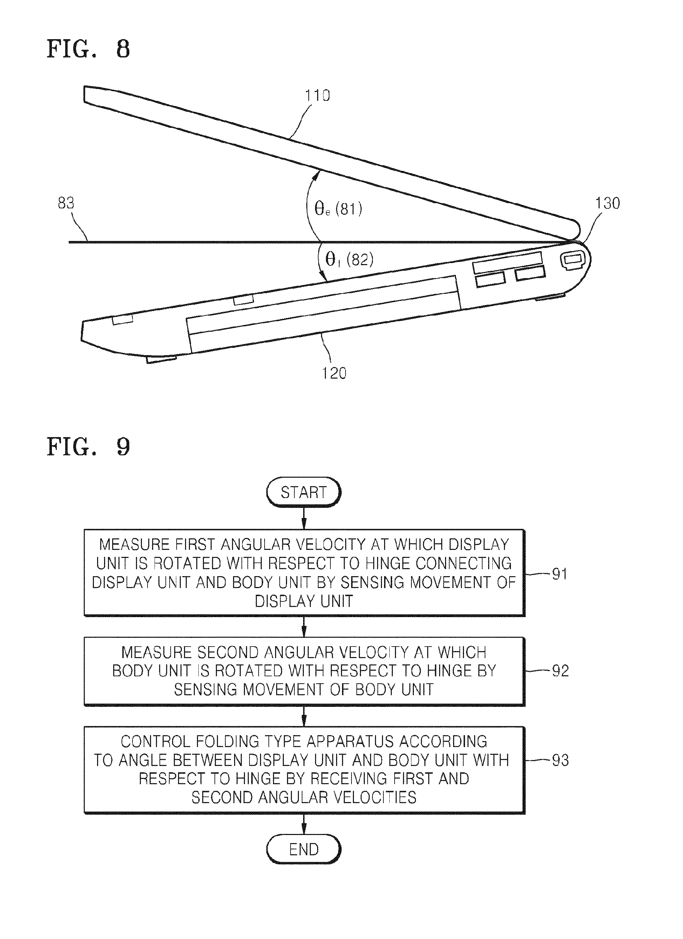

FIG. 8 is a view illustrating an operation of a folding type apparatus according to another embodiment of the present invention. Referring to FIG. 8, the display unit 110 and the body unit 120 are rotated in different directions. In this case, the controller 140 controls the operation of the folding type apparatus 100 by using the first angle received from the first sensor 111 disposed in the display unit 110 and the second angle received from the second sensor 121 disposed in the body unit 120.

The first angle at which the display unit 110 is rotated is $\theta_e$ 81, a positive angle since the display unit 110 is rotated away from the body unit 120, and the angle at which the body unit 120 is rotated is $\theta_f$ 82, another positive angle since the body unit 120 is rotated away from the display unit 110. The measured $\theta_e$ 81 and $\theta_f$ 82 are angles at which the display unit 110 and the body unit 120 are rotated from a reference surface 83, respectively.

In FIG. 8, when the folding type apparatus 100 is in a folded state, the display unit 110 is rotated by $\theta_e$, 81, and the body unit 120 is rotated by $\theta_f$ 82. Since both the display unit 110 and the body unit 120 are rotated, the controller 140 may calculate $\theta_e$ 81 and $\theta_f$ 82 and determine the calculated $\theta_e$ 81 and $\theta_f$ 82 to be angles between the display unit 110 and the body unit 120. In this case, the controller 140 calculates $\theta_e$ 81 and $\theta_f$ 82 and determines the angle between the display unit 110 and the body unit 120 by using a value obtained by combining $\theta_e$ 81 and $\theta_f$ 82. Accordingly, the controller 140 may compare the determined angle with a threshold value and may control the operation of the folding type apparatus 100 when the angle is greater than the threshold value and when the angle is less than the threshold value.

If there is an initial value of the angle between the display unit 110 and the body unit 120, the controller 140 may add the determined angle to the initial value to determine the angle between the display unit 110 and the body unit 120.

FIG. 9 is a flowchart illustrating a method of controlling the folding type apparatus 100 of FIG. 1. Referring to FIG. 9, the method of controlling the folding type apparatus 100 includes operations that are sequentially performed by the folding type apparatus 100 illustrated in FIG. 4. Accordingly, although it is omitted here, the above description regarding the folding type apparatus 100 may be applied to the method of controlling the folding type apparatus 100.

In operation 91, the first sensor 111 senses movement of the display unit 110 and measures the first angular velocity at which the display unit 110 is rotated with respect to the hinge 130 connecting the display unit 110 and the body unit 120. Since the first sensor 111 is disposed in the display unit 110, the first sensor 111 is moved in association with the movement of the display unit 110. Accordingly, the first sensor 111 may measure an angular velocity of the display unit 110 according to the movement of the display unit 110. The first sensor 111 is a sensor capable of measuring an angular velocity during the rotation and may be, for example, a gyro sensor. The first sensor 111 measures the angular velocity of the display unit 110 and outputs the measured angular velocity to the controller 140.

In operation 92, the second sensor 121 senses movement of the body unit 120 and measures the second angular velocity at which the body unit 120 is rotated with respect to the hinge 130. Since the second sensor 121 is disposed in the body unit 120, the second sensor 121 is moved in association with the movement of the body unit 120. Accordingly, the second sensor 121 may measure an angular velocity of the body unit 120 according to the movement of the body unit 120. The second sensor 121 is a sensor capable of measuring an angular velocity during the rotation and may be, for example, a gyro sensor. The second sensor 121 measures the angular velocity of the body unit 120 and outputs the measured angular velocity to the controller 140.

In operation 93, the controller 140 receives the first and second angular velocities and controls the operation of the folding type apparatus 100 according to an angle between the display unit 110 and the body unit 120 with respect to the hinge 130. The controller 140 receives the first and second angular velocities from the first sensor 111 and the second sensor 121, respectively. The controller 140 calculates an angle between the display unit 110 and the body unit 120 by using a sum of a first angle and a second angle, wherein the first angle at which the display unit 110 is rotated with respect to the hinge 130 is obtained by integrating the first angular velocity according to time and the second angle at which the body unit 120 is rotated with respect to the hinge 130 is obtained by integrating the second angular velocity according to time. The controller 140 controls the operation of the folding type apparatus 100 according to the calculated angle. For example, the controller 140 may supply power to the display unit 110 of the folding type apparatus 100 or may block the supply of power to the display unit 110 according to the calculated angle, and the controller 140 may control the display unit 110 to display a standby screen, a menu screen, or a specific program.

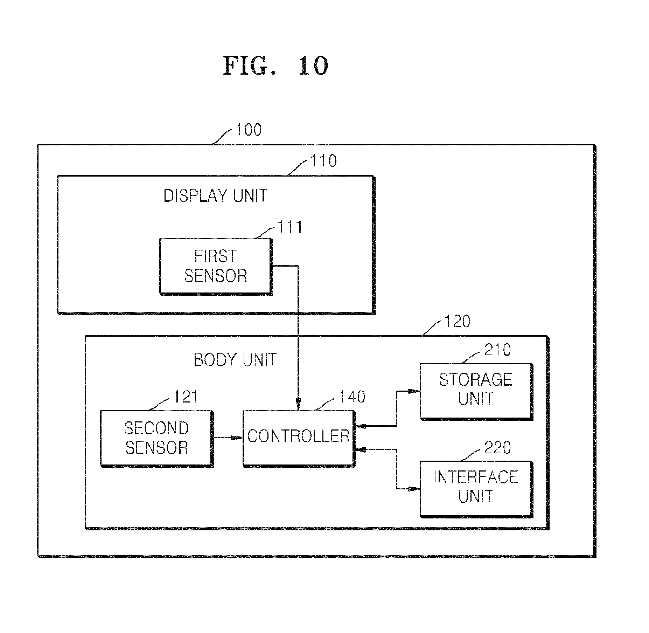

FIG. 10 is a block diagram illustrating a folding type apparatus according to another embodiment of the present invention. The folding type apparatus of FIG. 10 further includes a storage unit 210 and an interface unit 220 as compared with the folding type apparatus 100 illustrated in FIG. 4. Accordingly, although it is omitted here, the above description regarding the folding type apparatus 100 may be applied to the current embodiment.

Referring to FIG. 10, the folding type apparatus 100 may further include the storage unit 210 and the interface unit 220. The storage unit 210 and the interface unit 220 may be disposed in the body unit 120.

The storage unit 210 is a memory capable of storing data. For example, the storage unit 210 may be a dynamic random access memory (DRAM).

The storage unit 210 may store an angle between the display unit 110 and the body unit 120 of the folding type apparatus 100. The storage unit 210 stores an angle that is the angle between the display unit 110 and the body unit 120 that is calculated by the controller 140. When there is a request to output the angle between the display unit 110 and the body unit 120 from the controller 140, the storage unit 210 outputs the stored angle to the controller 140. The storage unit 210 receives the angle between the display unit 110 and the body unit 120 from the controller 140 and renews the stored angle.

The interface unit 220 is a medium that enables communication between a user and a program. For example, the interface unit 220 may be a kind of program providing an image so that a user may input a predetermined threshold value and outputting the input predetermined threshold value. The predetermined threshold value may be previously set or may be input by a user via the interface unit 220.

Also, the set predetermined threshold value may be changed to a value that is input via the interface unit 220. The interface unit 220 outputs the input predetermined threshold value to the controller 140. The controller 140 controls an operation of the folding type apparatus 100 by using a result obtained by comparing the input predetermined threshold value with the angle between the display unit 110 and the body unit 120.

Since the controller 140 controls the folding type apparatus 100 by using the predetermined threshold value that is input by a user via the interface unit 220, the operation of the folding type apparatus 100 may be designated according to an opening degree of the folding type apparatus 100 based on the predetermined threshold value designated by a user.

For example, when a user inputs 20 degrees as a predetermined threshold value, if the angle between the display unit 110 and the body unit 120 is equal to or less than 20 degrees, the controller 140 may control the supply of power to the display unit 110 to be blocked or may control a standby state of the folding type apparatus 100 to be maintained. If the angle between the display unit 110 and the body unit 120 is equal to or greater than 20 degrees, the controller 140 may control power to be supplied to the display unit 110 or may control the folding type apparatus 100 to be normally operated.

According to the above-described embodiments, an operation of the folding type apparatus 100 may be controlled by measuring angular velocities of the display unit 110 and the body unit 120 of the folding type apparatus 100.

Accordingly, since the folding type apparatus 100 is controlled by measuring an angular velocity of the folding type apparatus 100, the folding type apparatus 100 may be controlled in real time according to movement of the folding type apparatus 100.

Rotations of a display unit and a body unit with respect to a hinge connecting the display unit and the body unit of a folding type apparatus are sensed to calculate an angle between the display unit and the body unit, and the folding type apparatus may be controlled according to the calculated angle.

The present invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and etc. The computer readable recording medium can also be distributed over network coupled computer systems so that the computer readable code is stored and executed in a distributed fashion.

While the present invention has been particularly illustrated and described with reference to exemplary embodiments thereof, it will be understood by those of ordinary skill in the art that various changes in form and details may be made therein without departing from the present invention as defined by the following claims.

### Claims

1. A folding type apparatus comprising a display unit and a body unit, the folding type apparatus comprising:

   a first sensor disposed in the display unit to measure a first angular velocity at which the display unit is rotated with respect to a hinge connecting the display unit and the body unit by sensing movement of the display unit;
   a second sensor disposed in the body unit to measure a second angular velocity at which the body unit is rotated with respect to the hinge by sensing movement of the body unit; and
   a controller to control the folding type apparatus according to an angle between the display unit and the body unit with respect to the hinge by receiving the first and second angular velocities.

2. The folding type apparatus of claim 1, wherein the controller calculates the angle, compares the angle with a predetermined threshold value and controls the folding type apparatus based on a result of the comparison.

3. The folding type apparatus of claim 1 or claim 2, wherein the controller obtains a first angle at which the display unit is rotated with respect to the hinge by integrating the first angular velocity according to time and obtains a second angle at which the body unit is rotated with respect to the hinge by integrating the second velocity according to time and calculates the angle between the display unit and the body unit by using a sum of the first angle and the second angle.

4. The folding type apparatus of claim 2, wherein if the calculated angle is less than the predetermined threshold value, the controller controls the folding type apparatus to enter a standby mode.

5. The folding type apparatus of claim 2, wherein if the calculated angle is less than the predetermined threshold value, the controller blocks supply of power to the display unit.

6. The folding type apparatus of claim 2, wherein if the calculated angle is less than the predetermined threshold value, the controller turns off a power source of the folding type apparatus.

7. The folding type apparatus of claim 2, wherein if the calculated angle is greater than the predetermined threshold value, the controller supplies power to the display unit.

8. The folding type apparatus of any one of the preceding claims, wherein the first and second sensors are gyro sensors.

9. A method of controlling a folding type apparatus comprising a display unit and a body unit, the method comprising:

   measuring a first angular velocity at which the display unit is rotated with respect to a hinge connecting the display unit and the body unit by sensing movement of the display unit;
   measuring a second angular velocity at which the body unit is rotated with respect to the hinge by sensing movement of the body unit; and
   controlling the folding type apparatus according to an angle between the display unit and the body unit by receiving the first and second angular velocities.

10. The method of claim 9, wherein the controlling of the folding type apparatus comprises controlling the folding type apparatus by calculating the angle between the display unit and the body unit and comparing the angle with a predetermined threshold value.

11. The method of claim 9, wherein the controlling of the folding type apparatus comprises calculating the angle between the display unit and the body unit by using a sum of a first angle and a second angle, wherein the first angle at which the display unit is rotated with respect to the hinge is obtained by integrating the first angular velocity according to time, and the second angle at which the body unit is rotated with respect to the hinge is obtained by integrating second velocity according to time.

12. The method of claim 10, wherein the controlling of the folding type apparatus comprises, if the calculated angle is less than the predetermined threshold value, controlling the folding type apparatus to enter a standby mode.

13. The method of claim 10, wherein the controlling of the folding type apparatus comprises, if the calculated angle is less than the predetermined threshold value, controlling the supply of power to the display unit to be blocked.

14. The method of claim 10, wherein the controlling of the folding type apparatus comprises, if the calculated angle is less than the predetermined threshold value, turning off a power source of the folding type apparatus.

15. The method of claim 10, wherein the controlling of the folding type apparatus comprises, if the calculated angle is greater than the predetermined threshold value, supplying power to the display unit.

FIG. 1

# FIG. 2

110

130

111

ROTATION AXIS OF
DISPLAY UNIT

FIG. 3

## FIG. 4

```
┌─────────────────────────────────────────────┐ ╭─100
│                                               │
│  ┌─────────────────────────────────────────┐ │ ╭─110
│  │            DISPLAY UNIT                  │ │
│  │                                         │ │ ╭─111
│  │        ┌─────────────────┐              │ │
│  │        │  FIRST SENSOR   │              │ │
│  │        └─────────────────┘              │ │
│  └─────────────────────────────────────────┘ │
│                                               │
│  ┌─────────────────────────────────────────┐ │ ╭─120
│  │            BODY UNIT                     │ │
│  │   ╭─121                    ╭─140         │ │
│  │  ┌──────────┐         ┌──────────────┐   │ │
│  │  │ SECOND   │────────▶│ CONTROLLER   │   │ │
│  │  │ SENSOR   │         │              │   │ │
│  │  └──────────┘         └──────────────┘   │ │
│  └─────────────────────────────────────────┘ │
└─────────────────────────────────────────────┘
```

## FIG. 5

$\theta_a$ (51)

110

130

120

## FIG. 6

110

130

$\theta_b$ (61)

120

## FIG. 7

110

120

$\theta_d$ (72)

$\theta_c$ (71)

130

73

## FIG. 8

## FIG. 9

```
START
```

MEASURE FIRST ANGULAR VELOCITY AT WHICH DISPLAY UNIT IS ROTATED WITH RESPECT TO HINGE CONNECTING DISPLAY UNIT AND BODY UNIT BY SENSING MOVEMENT OF DISPLAY UNIT — 91

MEASURE SECOND ANGULAR VELOCITY AT WHICH BODY UNIT IS ROTATED WITH RESPECT TO HINGE BY SENSING MOVEMENT OF BODY UNIT — 92

CONTROL FOLDING TYPE APPARATUS ACCORDING TO ANGLE BETWEEN DISPLAY UNIT AND BODY UNIT WITH RESPECT TO HINGE BY RECEIVING FIRST AND SECOND ANGULAR VELOCITIES — 93

```
END
```

# FIG. 10